# EUROPEAN PATENT SPECIFICATION

(11) **EP 2 100 757 B1**
(45) Date of publication and mention of the grant of the patent: **19.01.2011**
(21) Application number: 09002833.3
(22) Date of filing: 27.02.2009
(51) Int. Cl.: B60D 1/46

(54) **Tractor hitches**
Traktoranhängekupplung
Crochets de tracteur

(30) Priority: 12.03.2008 GB 0804512
(43) Date of publication of application: 16.09.2009
(73) Proprietor: AGCO GmbH, 87616 Marktoberdorf (DE)
(72) Inventor: Wolfle, Gottlieb, 87616 Marktoberdorf (DE)
(74) Representative: Morrall, Roger

(56) References cited:
- EP-A- 0 298 073
- EP-A- 1 312 491
- DE-A1- 3 441 897
- DE-A1- 3 513 367
- US-A- 3 865 406

## Description

This invention relates to tractor hitches, hereinafter referred to as being of the type described, comprising a pair of generally vertically support rails between which a hitching means is vertically slideable in vertically extending grooves in the rails, the hitching means being lockable at various different heights between the rails by a locking means carried by a the hitching means which engages locking formations in the rails, the hitch also having a safety device to prevent the hitching means from falling out of the bottom end of the rail grooves.

US3865406 for example describes a generic trailer hitch for coupling mobile homes to towing vehicles which comprises a standard hitch bore which is attached to a vertically moveable rack gear section which runs between two rails and which is engageable at various heights above the ground by a horizontal moving gear plate which has means for locking the gear plate when the hitch bore assembly has been positioned to the desired height.

Hitches of the type described are well known and function satisfactorily but the operation of the safety device is awkward since, in order to release the safety device a tractor operator must both support the weight of the hitching means, which can be considerable, and at the same time disengage the safety device if he wishes to remove the hitching means from between the support rails when, for example, using a power take off shaft which normally extends between the rails.

There is therefore a requirement for an improved hitch of the type described in which the operation of the safety device is made more convenient.

Thus in accordance with the present invention there is provided a tractor hitch of the type described in which the safety device comprises an abutment on one of the rails which is engaged in a pivoting latch carried by the hitching means as the hitching means moves towards the bottom ends of the groves, the pivoting latch means being pivotable to a position where the abutment can no longer be engaged when it is desired to remove the hitching means from the bottom ends of the grooves.

Preferably the pivoting latch is pivotable upwardly relative to the hitching means so that if at least part of the weight of the hitching means is being supported by holding the pivoting latch, the latch moves to a position in which the abutment can no longer be engaged.

With such an arrangement disengagement of the latching means from the lower ends of the grooves in the support rails is greatly simplified.

The pivoting latch is preferably biased to a position in which the abutment can be engaged. This biasing may be gravity or by the use of a spring.

One embodiment of the present invention will now be described, by way of example only, with reference to the accompanying drawings in which:

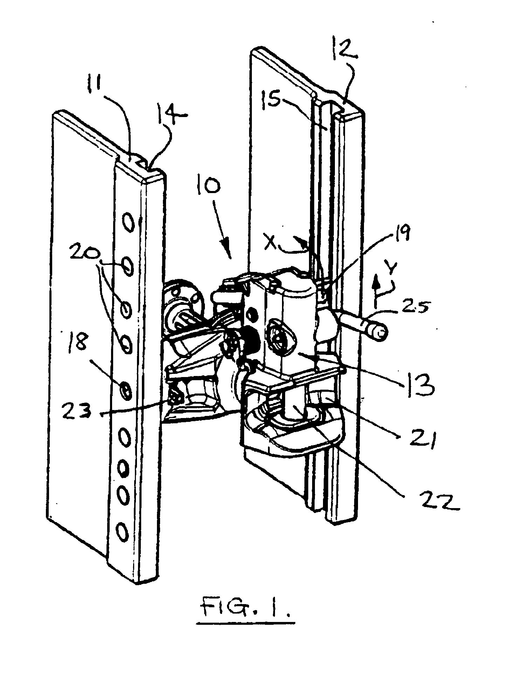

Figure 1 shows a perspective view of a tractor hitch in accordance with the present invention;
Figure 2 shows a perspective view of a vertically moveable hitching means used in the hitch of Figure 1;
Figures 3 and 4 show part plan and side views respectively of Figure 1 showing details of the safety device of the present invention, and
Figure 5 shows a section on the line A-A of Figure 3.

Referring to the drawings, a tractor hitch 10 has a pair of generally vertically extending support rails 11 and 12 which are bolted to the rear of the tractor in a spaced relationship. A hitching means 13 in the form of a jaw type hitch is vertically slideable relative to support rails 11 and 12 in vertically extending grooves 14 and 15.

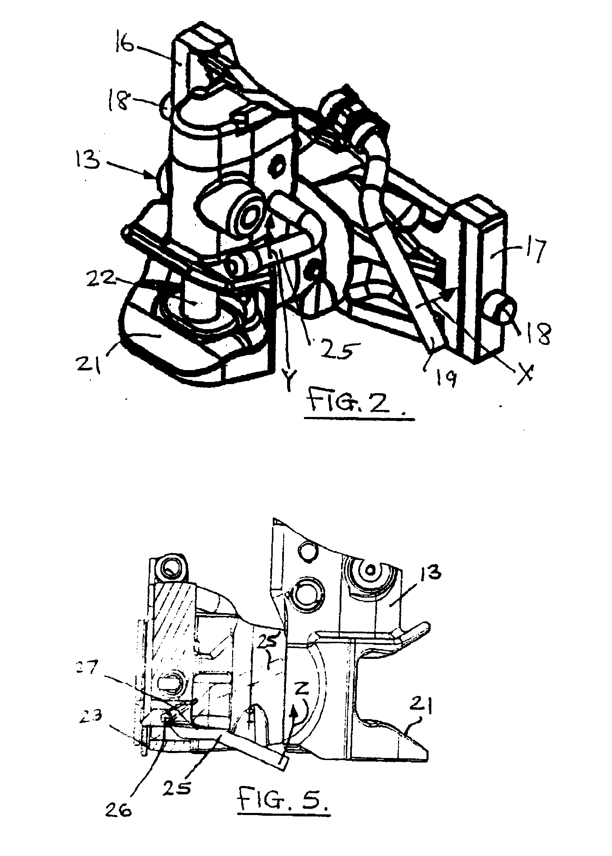

As best seen in Figure 2, the hitch 13 is provided with shoes 16 and 17 which slide in grooves 14 and 15 respectively. The hitch can be locked in a number of different vertical positions using locking pins 18 which engage holes 20 formed in the support rails I 1 and 12. Locking pins 18 can be retracted to disengage the operative hole 20 by moving the lever 19 in the direction of the arrow X of Figure 2. This allows the hitch 13 to be slide vertically within the grooves 14 and 15.

The hitch 13 also includes a jaw 21 in which a vertically moveable coupling pin 22 is provided. This coupling pin can also be moved by movement of the pivoting latch 25 as indicated by the arrow Y in Figure 2.

The hitch 10 described so far above is thus conventional in construction. In accordance with the present invention a safety device is provided to prevent the hitching means 13 from falling out of the bottom end of grooves 14 and 15 when the locking pins 18 are disengaged from the holes 20. Such a safety device is desirable in view of the high weight of the hitching means 13.

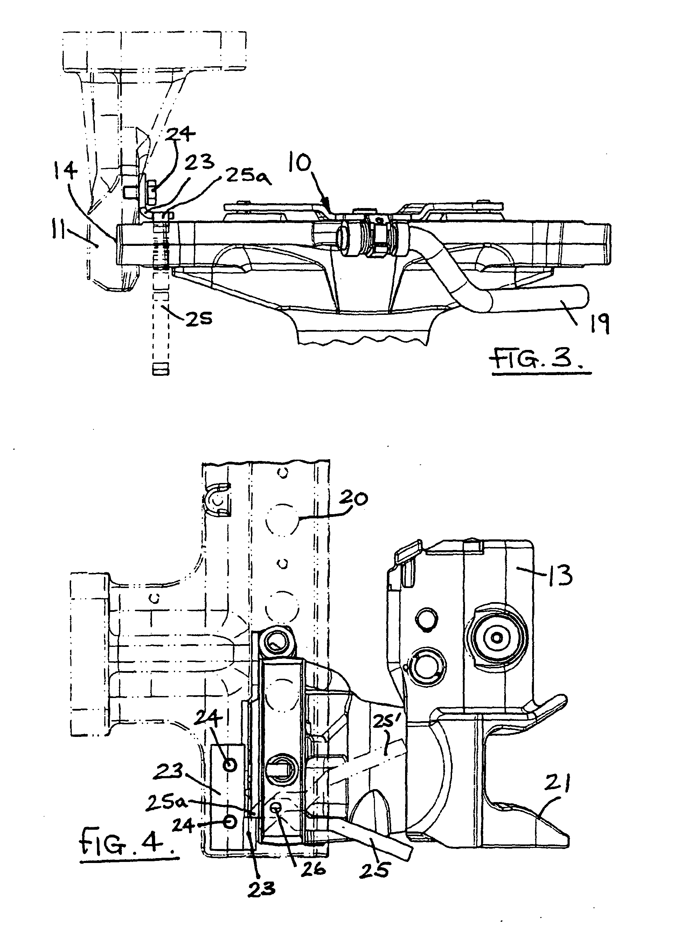

The safety device provided comprises an abutment in the form of a bracket 23 which is bolted at 24 onto the inside of support rail 11 and which is best seen in Figures 3 and 4. This bracket 23 is engaged by a pivoting latch 25 which is pivoted about an axis 26 on the hitch 13 and which has an end portion 25a which is engageable with the bracket 23 to prevent the hitch 13 falling out of the bottom ends of the rails 14 and 15.

As best seen in Figure 5, the latch 25 is biased by a torsion spring 27 to a position in which it is engageable with bracket 23. In order to disengage the bracket 23 and allow the hitch 13 to be then removed from the bottom ends of the grooves 14 and 15 the latch 25 must be pivoted upwardly as shown by the arrow Z in Figure 5 to the dotted line position 25'. This upward pivoting of the latch 25 is most easily achieved by holding the end of the latch 25 to support at least part of the weight of the hitch 13 which causes the latch 25 to move to position where it can no longer engage the bracket 23 thus allowing the hitch to be removed from the bottom ends of the grooves 14 and 15.

It will therefore be appreciated that, in order for the operator to remove the hitch 13 from the bottom ends of the grooves 14 and 15, it requires the operator to make a intentional upward movement of the latch 25 and the direction of the arrow Z thus preventing accidental falling of the hitch from the grooves 14 and 15.

Although the arrangement described above the latch 25 is biased to a position in which it can engage the brackets 23 by a spring 27 this biasing of the latch 25 may be simply achieved by the weight of the portion of the latch 25 which projects from the hitch 13.

## Claims

1. A tractor hitch (10) comprising a pair of generally vertically support rails (11, 12) between which a hitching means (13) is vertically slideable in vertically extending grooves (14, 15) in the rails, the hitching means being lockable at various different heights between the rails by a locking means (18, 19) carried by a hitching means which engages locking formations (20) in the rails, the hitch also having a safety device to prevent the hitching means from falling out of the bottom end of the rail grooves, the hitch being **characterised in that** the safety device comprises an abutment (23) on one of the rails (11) which is engaged by a pivoting latch (25) carried by the hitching means as the hitching means move towards the bottom end of the grooves (14,15), the pivoting latch (25) being pivotable to a position where the abutment (23) can no longer be engaged when it is desired to remove the hitching means from the bottom end of the grooves.

2. A tractor hitch according to claim 1 in which the pivoting latch (25) is pivotable upwardly relative to the hitching means (13) so that if at least part of the weight of the hitching means is being supported by holding the pivoting latch the latch moves to a position where the abutment (23) can no longer be engaged.

3. A tractor hitch according to claim 1 or claim 2 in which the pivoting latch (25) is biased (27) to a position in which the abutment (23) can be engaged.

4. A tractor hitch according to claim 3 in which the pivoting latch (25) is biased by a spring (27) or by gravity to a position which the abutment can be engaged.

## Patentansprüche

1. Anbauvorrichtung (10) für ein Zugfahrzeug, insbesondere einen Traktor, mit einem Paar sich grundsätzlich vertikal erstreckender Tragschienen oder -elemente (11, 12), zwischen denen ein Anbaumittel (13) in sich vertikal erstreckende Ausnehmungen oder Nuten (14, 15) in den Tragschienen oder -elementen vertikal gleitend bewegbar ist, wobei das Anbaumittel bei mehreren unterschiedlichen Höhen zwischen den Tragschienen oder -elementen durch ein Festsetzmittel, Verriegelungsmittel oder Rastmittel (18, 19) festsetzbar, rastierbar oder verriegelbar ist, welches von dem Anbaumittel getragen ist und welches eingreift in oder in Wechselwirkung tritt mit Ausformungen (20) in den Tragschienen oder -elementen, wobei die Anbauvorrichtung eine Sicherheitseinrichtung besitzt zur Vermeidung, dass das Anbaumittel aus dem unteren Ende der Ausnehmungen oder Nuten der Tragschienen oder -elemente herausfällt, **dadurch gekennzeichnet, dass** die Sicherheitseinrichtung einen Anschlag oder ein Widerlager (23) auf einer der Tragschienen oder -elemente (11) besitzt, in welchen oder welches ein(e) von dem Anbaumittel getragene(r) Schwenkriegel oder eine Schwenkklinke (25) eingreift oder mit welchem ein(e) von dem Anbaumittel getragene(r) Schwenkriegel oder eine Schwenkklinke (25) in Wechselwirkung tritt bei Bewegung des Anbaumittels in Richtung des unteren Endes der Ausnehmungen oder Nuten (14, 15), wobei der Schwenkriegel oder die Schwenkklinke (25) verschwenkbar ist in eine Position, in der ein Eingreifen in den oder eine Wechselwirkung mit dem Anschlag oder Widerlager (23) nicht mehr möglich ist, wenn es gewünscht ist, das Anbaumittel aus dem unteren Ende der Ausnehmungen oder Nuten zu entfernen.

2. Anbauvorrichtung nach Anspruch 1, **dadurch gekennzeichnet, dass** der Schwenkriegel oder die Schwenkklinke (25) relativ zu dem Anbaumittel (13) aufwärts verschwenkbar ist, so dass, wenn zumindest ein Teil des Gewichts des Anbaumittels durch Halten des Schwenkriegels oder der Schwenkklinke abgestützt wird sich der Schwenkriegel oder die Schwenkklinke in eine Position bewegt, in welcher ein Eingriff in den oder eine Wechselwirkung mit dem Anschlag oder Widerlager (23) nicht länger möglich ist.

3. Anbauvorrichtung nach Anspruch 1 oder 2, **dadurch gekennzeichnet, dass** der Schwenkriegel oder die Schwenkklinke (25) beaufschlagt (27) wird in Richtung einer Position, in welcher ein Eingreifen in den oder eine Wechselwirkung mit dem Anschlag oder Widerlager (23) möglich ist.

4. Anbauvorrichtung nach Anspruch 3, **dadurch gekennzeichnet, dass** der Schwenkriegel oder die Schwenkklinke (25) durch eine Feder (27) oder durch die Gravität beaufschlagt ist in Richtung einer Position, in welcher ein Eingreifen in den oder eine Wechselwirkung mit dem Anschlag oder Widerlager möglich ist.

## Revendications

1. Crochet d'attelage de tracteur (10) comprenant une paire de rails de support sensiblement verticaux (11, 12) entre lesquels un moyen d'attelage (13) peut coulisser verticalement dans des rainures s'étendant verticalement (14, 15) sur les rails, le moyen d'attelage pouvant être verrouillé à différentes hauteurs variables entre les rails par un moyen de verrouillage (18, 19) supporté par le moyen d'attelage qui est en prise dans des cavités de verrouillage (20) sur les rails, le crochet d'attelage comportant aussi un dispositif de sécurité destiné à empêcher que le moyen d'attelage ne tombe au-delà de l'extrémité inférieure des rainures de rail, le crochet d'attelage étant **caractérisé en ce que** le dispositif de sécurité comprend une butée (23) sur l'un des rails (11) qui vient en prise avec un verrou pivotant (25) supporté par le moyen d'attelage lorsque le moyen d'attelage se déplace vers l'extrémité inférieure des rainures (14, 15), le verrou pivotant (25) pouvant pivoter vers une position dans laquelle la butée (23) ne peut plus être en prise, lorsque l'on désire retirer le moyen d'attelage depuis l'extrémité inférieure des rainures.

2. Crochet d'attelage de tracteur selon la revendication 1, dans lequel le verrou pivotant (25) peut pivoter vers le haut par rapport au moyen d'attelage (13) de telle sorte que si au moins une partie du poids du moyen d'attelage est supporté en maintenant le verrou pivotant, le verrou se déplace vers une position dans laquelle la butée (23) ne peut plus être en prise.

3. Crochet d'attelage de tracteur selon la revendication 1 ou 2, dans lequel le verrou pivotant (25) est appliqué (27) vers une position dans laquelle la butée (23) peut être en prise.

4. Crochet d'attelage de tracteur selon la revendication 3, dans lequel le verrou pivotant (25) est appliqué par un ressort (27) ou par gravité vers une position dans laquelle la butée peut être en prise.
